# EUROPÄISCHE PATENTSCHRIFT

(11) **EP 1 725 419 B1**
(45) Veröffentlichungstag und Bekanntmachung des Hinweises auf die Patenterteilung: **20.09.2017**
(21) Anmeldenummer: 05715071.6
(22) Anmeldetag: 09.03.2005
(51) Int. Cl.: B60L 13/06, B60L 13/04

(54) **MAGNETANORDNUNG FÜR EIN MAGNETSCHWEBEFAHRZEUG**
MAGNET ARRANGEMENT FOR A MAGNETIC LEVITATION VEHICLE
SYSTEME MAGNETIQUE CONCU POUR UN VEHICULE A SUSTENTATION MAGNETIQUE

(30) Priorität: 15.03.2004 DE 102004012748
(43) Veröffentlichungstag der Anmeldung: 29.11.2006
(73) Patentinhaber: ThyssenKrupp Transrapid GmbH, 34127 Kassel (DE)
(72) Erfinder: BECKER, Peter, 82140 Olching (DE); ELLMANN, Siegfried, 9492 Eschen (LI); LÖSER, Friedrich, 85521 Riemerling (DE); ZHENG, Qinghua, 80331 München (DE)
(74) Vertreter: Lorenz, Bernd Ingo Thaddeus
(86) Internationale Anmeldenummer: PCT/DE2005/000406
(87) Internationale Veröffentlichungsnummer: WO 2005/090115

(56) Entgegenhaltungen:
- EP-A- 0 580 107
- DE-A- 3 143 512
- JP-A- 60 223 481

## Beschreibung

Die Erfindung betrifft eine Magnetanordnung der im Oberbegriff des Anspruchs 1 angegebenen Gattung.

Magnetanordnungen dieser Art dienen bei einem Magnetschwebefahrzeug beispielsweise der Funktion "Tragen". Sie weisen zu diesem Zweck einen Magnetrücken auf, der über Primärfedern an Gestellbügeln hängt, die ihrerseits an einem Schweberahmen für einen Wagenkasten des Magnetschwebefahrzeugs befestigt sind. Dabei ist der mechanische Aufbau so gewählt, daß an den Längsenden der Schweberahmen je zwei, an unterschiedlichen Magnetanordnungen befestigte Gestellbügel vorgesehen sind. Die Magnetanordnungen weisen dabei zwölf Magnetpole auf, die in zwei Gruppen zu je sechs Magnetpolen zusammengefaßt sind, so daß je sechs Magnetpole einen sog. Halbmagneten bilden. Die Wicklungen der Magnetpole jeder Gruppe werden durch je einen Regelkreis so mit Strom versorgt, daß der Tragspalt zwischen der Magnetanordnung und dem Fahrweg beim Betrieb des Magnetschwebefahrzeugs stets konstant bleibt.

Die Aufteilung der Magnetpole in zwei Gruppen dient der Erzielung einer ausreichenden Redundanz. Ein Ausfall eines Halbmagneten hat nicht automatisch einen Ausfall der gesamten Magnetanordnung zur Folge. Vielmehr kann ein Absinken des Wagenkastens auf den Fahrweg dadurch verhindert werden, daß der Strom durch die Wicklungen eines benachbarten Halbmagneten entsprechend vergrößert wird. Eine solche Steuerung wird jedoch mit zwei Nachteilen verkauft.

Ein erster Nachteil der gruppenweisen Zusammenfassung von je sechs Magnetpolen besteht darin, daß in den Regelkreisen vergleichsweise hohe Spannungen auftreten können, deren Spitzen gegenüber Betriebsspannungen von z. B. 440 V im Kilovoltbereich liegen können. Da die Wicklungen in der Regel aus Leitungsbändern hergestellt werden, entstehen zwischen den einzelnen Lagen sowie zwischen diesen und den Kernen parazitäre Kapazitäten, die mit den Induktivitäten der Wicklungen elektrische Schwingkreise bilden. Diese haben zur Folge, daß bei Anregung der Magnetanordnungen Resonanzschwingungen auftreten, die zu den genannten starken Spannungsüberhöhungen fuhren und nicht reparable Isolationsschäden in den Wicklungen verursachen können. Ein zweiter Nachteil ist, daß die Regelkreise mit besonderen Sicherheitseinrichtungen versehen werden müssen, die beim fehlerhaften Verhalten irgendeines Stellgliedes oder dessen Ansteuerung verhindern, daß die zugeordnete Gruppe von Magnetpolen an den Fahrweg anschlägt.

Aus der EP 0 580 107 A1 ist ein Transportsystem mit einem magnetisch schwebenden Schlitten vorgesehen, bei dem die Energieversorgung der Tragmagnete über eine Batterie erfolgt. Um die Batterie nachladen zu können, ist an Teilen des Fahrweges eine mit Hochfrequenz beaufschlagte Sendespule vorgesehen, wobei das Fahrzeug mit einer zugeordneten Sekundärspule ausgerüstet ist. Durch die Zuführung von Hochfrequenzenergie kann die Batterie als zentrale Energieversorgungseinrichtung geladen werden. Das Energieversorgungssystem ist nicht redundant.

Ausgehend davon besteht das von der Erfindung zu lösende technische Problem darin, die Magnetanordnung der eingangs bezeichneten Gattung so auszubilden, daß Isolationsschäden sicher vermieden werden und keine Sicherungseinrichtungen mehr erforderlich sind.

Zur Lösung dieser Aufgabe dienen die kennzeichnenden Merkmale des Anspruchs 1.

Die Erfindung bringt den Vorteil mit sich, daß die Regelschaltung so aufgebaut werden kann, daß die Stellglieder direkt an den parasitären Kapazitäten angreifen und damit schädliche Resonanzschwingungen weitgehend vermieden werden. Vorteilhaft ist ferner, daß eine defekte Regelschaltung selbst dann, wenn ihr Stellglied die zugehörige Wicklung mit maximal möglichen Strom beaufschlagt, keinen Anschlag der zugehörigen Magnetanordnung an den Fahrweg zur Folge haben kann. Dies wird vielmehr durch die Wirkung der benachbarten vier oder fünf Magnetpole derselben Gruppe wirksam vermieden, deren Regelfunktion in jedem Fall das Ausfallverhalten der defekten Magnetpole übersteigt.

Weitere vorteilhafte Merkmale der Erfindung ergeben sich aus den Unteransprüchen.

Die Erfindung wird nachfolgend anhand der in unterschiedlichen Maßstäben gehaltenen Zeichnungen an Ausführungsbeispielen näher erläutert. Es zeigen:
Fig. 1 schematisch einen Teilschnitt durch ein übliches Magnetschwebefahrzeug im Bereich eines mit einem Langstator versehenen Fahrwegs;
Fig. 2 und 3 in perspektivischen Darstellungen einen Modul mit zwei Magnetanordnungen des Magnetschwebefahrzeugs nach Fig. 1, von der Fahrwegseite bzw. von der Außenseite her betrachtet;
Fig. 4 schematisch einen Regelkreis für die Magnetanordnungen nach Fig. 2 und 3;
Fig. 5 eine der Fig. 3 entsprechende Darstellung des Moduls, jedoch nach Entfernung einer vorderen Verkleidung und mit Blick auf verschiedene, in einem Magnetrücken montierte Komponenten;
Fig. 6 eine schematische Vorderansicht einer der Magnetanordnungen nach Fig. 5 mit weiteren Einzelheiten;
Fig. 7 einen Schnitt längs der Linie VII - VII der Fig. 6;
Fig. 8 ein schematisches Schaltbild für die Magnetanordnung nach Fig. 6 bei erfindungsgemäßer Einzelansteuerung ihrer Magnetpole;
Fig. 9 einen der Fig. 1 ähnlichen, jedoch vergrößerten Teilschnitt zur Darstellung einer berührungslosen Energieübertragung vom Fahrweg auf das Magnetschwebefahrzeug;
Fig. 10 die Vorderansicht einer Magnetanordnung mit einer Empfängerspule für die berührungslose Energieübertragung, von der Seite eines Trägers des Fahrwegs her gesehen;
Fig. 11 einen Schnitt längs der Linie XI - XI der Fig. 10;
Fig. 12 eine perspektivische Vorderansicht der Magnetanordnung nach Fig. 10; und
Fig. 13 eine vergrößerte Einzelheit X der Fig. 11.

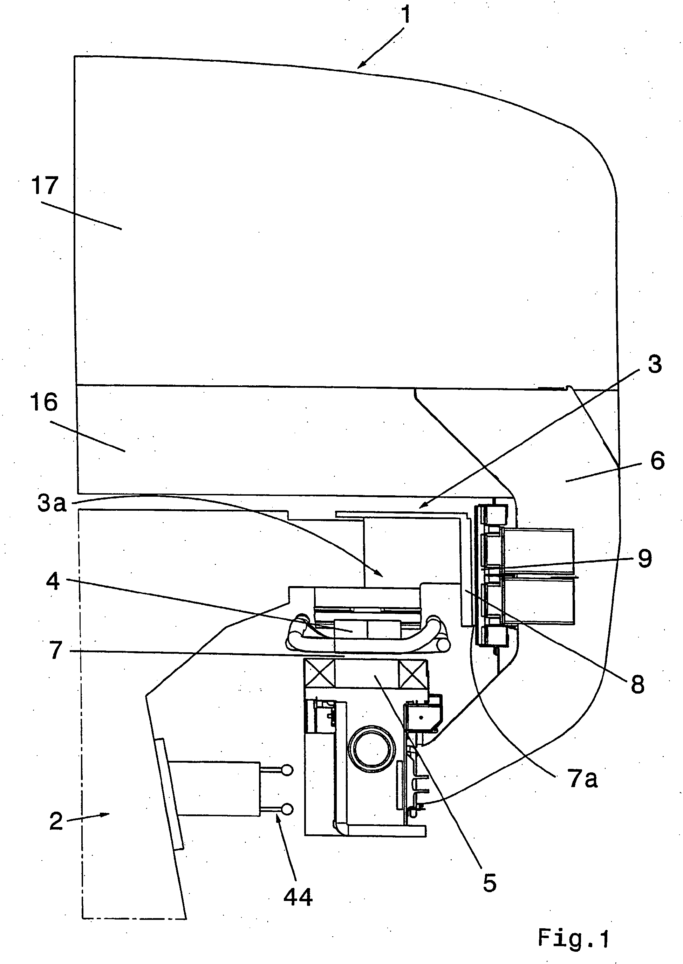

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt mittels eines Langstatormotors, der unterhalb der Fahrwegplatte 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstatormotors wird durch wenigstens eine erste, als Tragmagnet 5 wirkende Magnetanordnung erzeugt, die mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb des Magnetschwebefahrzeugs 1 einen vorgegebenen Spalt 7 von z. B. 10 mm zwischen dem Tragmagenten 5 und den Statorpaketen 4 aufrecht erhält.

Zur Spurführung des Magnetschwebefahrzeugs 1 weist die Fahrwegplatte 3 seitlich angebrachte Führschienen 8 auf, denen ebenfalls an den Gestellbügeln 6 montierte Führmagnete 9 gegenüberstehen, die beim Betrieb dazu dienen, zwischen sich und der Führschiene 8 einen dem Spalt 7 entsprechenden Spalt 7a aufrechtzuerhalten.

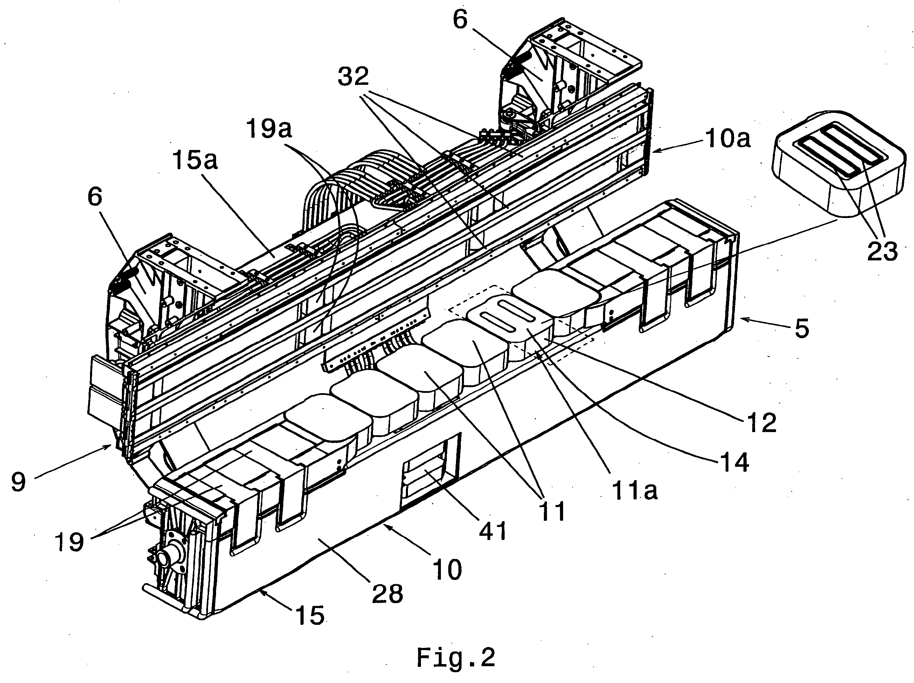

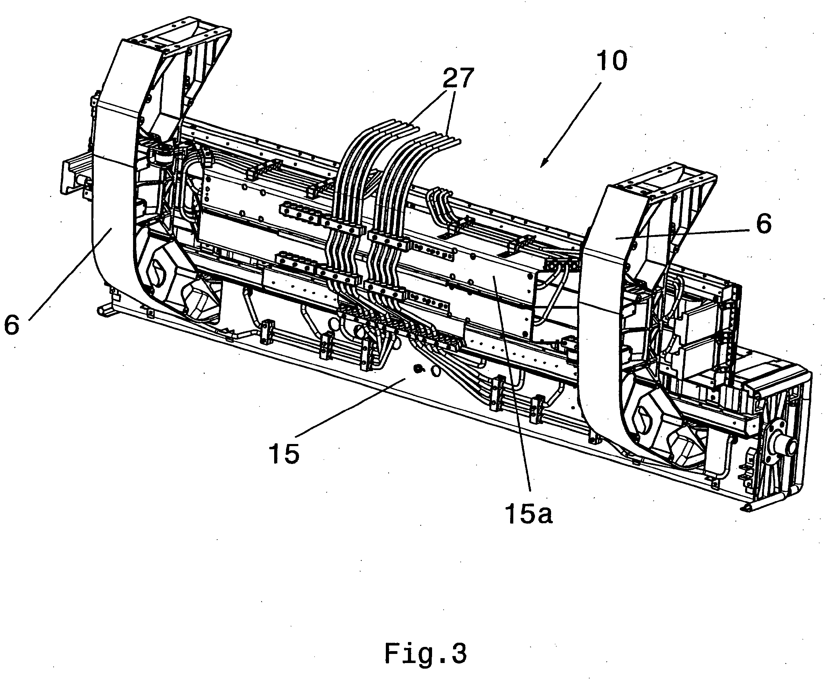

Gemäß Fig. 2 und 3 bilden der in Fig. 1 gezeigte Tragmagnet 5 und der Führmagnet 9 jeweils einen an den Gestellbügeln 6 befestigten Modul mit je einer Magnetanordnung 10 bzw. 10a für die Funktionen "Tragen" bzw. "Führen". Es ist jedoch klar, daß am Magnetschwebefahrzeug 1 seitlich nebeneinander und in Fahrtrichtung hintereinander in der Regel eine Vielzahl derartiger Module angebracht sein kann.

Die Magnetanordnung 10 für die Funktion "Tragen" enthält zwölf hintereinander angeordnete Magnetpole 11, deren elektrisch in Reihe geschaltete Wicklungen 12 und Kerne 14, die in Fig. 2 für einen der Magnetpole 11a schematisch angedeutet sind, normalerweise rundum von einem Korrosionsschutz in Form einer Gießharzschicht od. dgl. umgeben sind. Die Kerne 14 der einzelnen Magnetpole 11 sind untereinander durch nicht gezeigte Polrücken miteinander und mittels ebenfalls nicht dargestellter Polwangen und diese durchragender Stäbe an einem nachfolgend kurz als Magnetrücken bezeichneten Magnetrückenkasten 15 der Magnetanordnung 10 befestigt. An diesem Magnetrücken 15 greifen über Primärfedern die Gestellbügel 6 an, die mit einem biegesteifen, Längs- und Querverbinder aufweisenden Untergestell bzw. Schweberahmen 16 (Fig. 1) verbunden sind, auf dem ein mit einer Fahrgastzelle versehener Wagenkasten 17 des Magnetschwebefahrzeugs 1 abgestützt ist.

Magnetschwebefahrzeuge 1 und deren Magnetanordnungen sind dem Fachmann z. B. aus den Druckschriften US-PS 4,698,895, DE 39 28 277 A1 und PCT WO 97/30504 A1 allgemein bekannt, die hiermit der Einfachheit halber durch Referenz zum Gegenstand der vorliegenden Offenbarung gemacht werden.

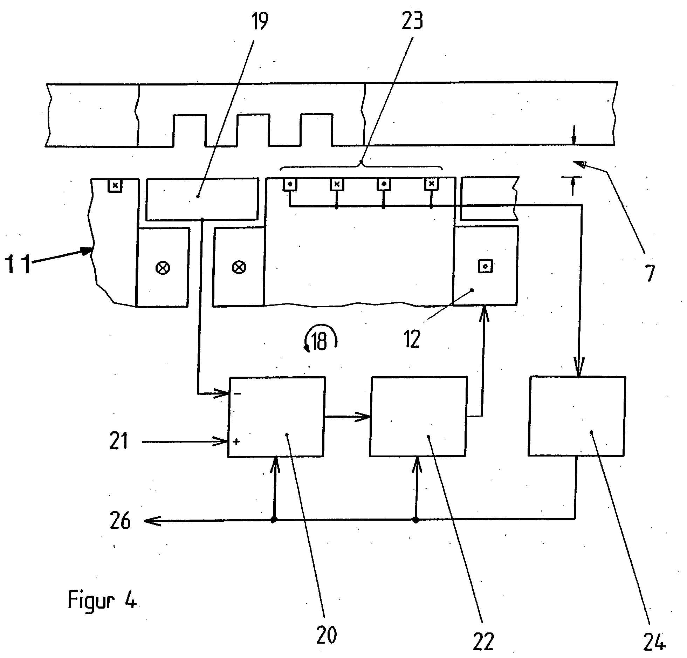

Zur Regelung der Wicklungen 12 der Magnetpole 11 derart, daß der Spalt 7 bei der Fahrt des Magnetschwebefahrzeugs 1 konstant bleibt, dient ein Regelkreis 18 nach Fig. 4. Dieser enthält wenigstens einen, vorzugsweise mehrere Spaltsensoren 19 (vgl. auch Fig. 2), die an dieselbe Ebene wie die Magnetpole 11 grenzen, mit induktiven oder kapazitiven Mitteln die aktuelle Größe des Spalts 7 messen und als Istwertgeber für den Regelkreis 18 dienen. Die vom Spaltsensor 19 abgegebenen elektrischen Signale werden einem Regler 20 zugeführt und in diesem mit einem über eine Leitung 21 fest vorgegebenen oder adaptierten Sollwert verglichen. Der Regler 20 ermittelt daraus ein Differenz- bzw. Stellsignal für ein Stellglied 22, das seinerseits den Strom durch die Wicklungen 12 so steuert, daß der Spalt 7 eine im wesentlichen konstante Größe hat und während der Fahrt beibehält.

Zur Versorgung des Regelkreises 18 mit der erforderlichen Betriebsspannung dient in Fig. 4 eine Energieversorgungseinheit, die in wenigstens einem Magnetpol angebrachte Wicklungen 23 eines Lineargenerators enthält, die in Fig. 2 in einer vergrößerten Einzelheit des Magnetpols 11a beispielhaft dargestellt sind und im Zusammenwirken mit dem Langstator eine von der Geschwindigkeit des Magnetschwebefahrzeugs 1 abhängige Wechselspannung von z. B. bis 300 V liefern. Diese Spannung wird in einem z. B. einen Hochsetzsteller aufweisenden Spannungswandler 24 in eine für den Betrieb vorgesehene Gleichspannung von z. B. 440 V umgewandelt, die einerseits an den Regler 20 und das Stellglied 22 gelegt, andererseits über eine Leitung 26 an das Bordnetz des Magnetschwebefahrzeugs 1 weitergeleitet wird.

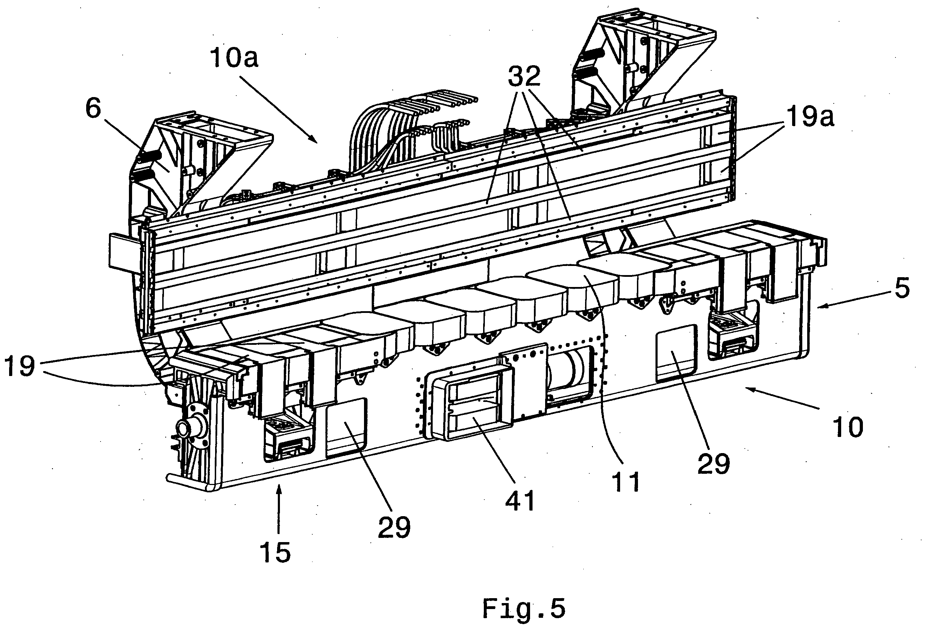

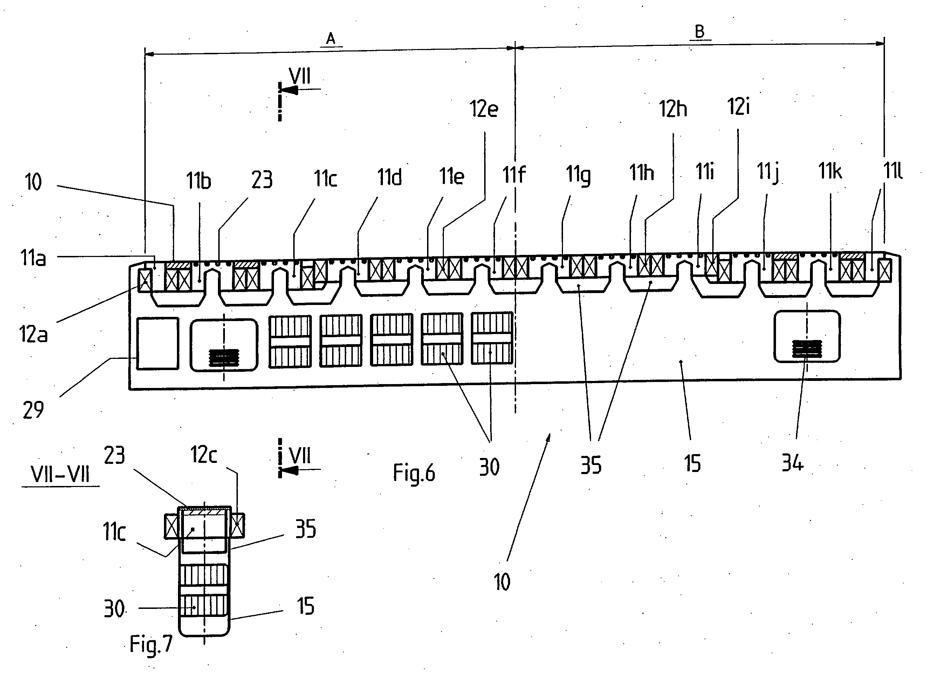

Während der Regler 20, das Stellglied 22 und der Spannungswandler 24 bisher irgendwo, vorzugsweise im Boden des Wagenkastens 17 untergebracht sind, was umfangreiche, durch das Bezugszeichen 27 in Fig. 3 angedeutete Verkabelungen erforderlich macht, wird erfindungsgemäß vorgeschlagen, diese Komponenten sämtlich im Magnetrücken 15 der Magnetanordnung 10 unterzubringen. Dies ergibt sich insbesondere aus Fig. 5, die eine Ansicht des Magnetrückens 15 nach Entfernung einer zum Fahrweg 3 hin gerichteten Verkleidung 28 (Fig. 2) zeigt. Mit dem Bezugszeichen 29 sind beispielhaft Öffnungen im Magnetrücken 15 gezeigt, die zur Aufnahme von nicht näher dargestellten, jedoch in Fig. 6 und 7 angedeuteten Einschüben 30 dienen, die den Regelkreis 18 und dessen Komponenten 20 bis 22 sowie die Spannungswandler 24 der Energieversorgungseinheit aufnehmen. Zweckmäßig sind die Einschübe 30 so gestaltet, daß bei ihrer Montage ohne weitere Zusatzarbeiten die richtigen Kontaktierungen hergestellt werden, d. h. die Öffnungen 29 und die Einschübe 30 sind mit zusammenwirkenden Steck- und Einschubmitteln od. dgl. versehen.

Die Unterbringung des Regelkreises 18 und des Spannungswandlers 24 im Magnetrücken 15 ist ohne Probleme möglich, weil der Magnetrücken 15 bei bekannten Magnetanordnungen 10 im wesentlichen aus einem Hohlkörper mit U-Profil besteht, so daß er ausreichend Platz bietet. Dadurch gelingt es, auf die Verkabelung 27 weitgehend zu verzichten, da praktisch nur noch die zum Bordnetz führende Leitung 26 sowie etwa benötigte Leitungen für Steuerungs- und Diagnoseaufgaben aus dem Magnetrücken 15 herausgeführt werden brauchen. Alle übrigen Leitungen können im Magnetrücken 15 verlaufen und von dort auf kürzestem Weg zu den Spaltsensoren 19 sowie den Wicklungen 12 und 23 geführt werden. Daraus folgt, daß die gesamte Magnetanordnung 10 einschließlich der Magnetpole 11, des Regelkreises 18, der Energieversorgungseinheit 23, 24 und der Verkabelung eine autonome, mechatronische Baueinheit bildet, in die alle für die Schwebefähigkeit erforderlichen Funktionalitäten integriert sind. Bei Bedarf können zusätzlich Pufferbatterien im Magnetrücken 15 untergebracht sein, die beim Stillstand oder bei zu langsamer Fahrt des Magnetschwebefahrzeugs 1 die erforderliche Energie liefern.

Der in Fig. 2 gezeigte Modul weist außer der Magnetanordnung 10 für die Funktion "Tragen" eine weitere Magnetanordnung 10a mit Magnetpolen 32 für die Funktion "Führen" auf. Die Magnetanordnung 10a ist in der Nähe eines Magnetrückens 15a (Fig. 3) vorgesehen und zweckmäßig innerhalb desselben Rastermaßes von z. B. 3096 mm untergebracht, das auch für die Magnetanordnung 10 gilt. Den Magnetenpolen 32 sind analog zu den Spaltsensoren 19 ausgebildete weitere Spaltsensoren 19a zugeordnet, die mit weiteren, nicht dargestellten und wie die Regelkreise 18 ausgebildeten Regelkreisen verbunden sind, die dem Zweck dienen, den Spalt 7a zwischen den Magnetpolen 32 und der Seitenführschiene 8 (Fig. 1) konstant zu halten. Für die weiteren Regelkreise gilt im wesentlichen dasselbe, wie oben anhand der Regelkreise 18 beschrieben wurde. Die Energieversorgung dieser Regelkreise erfolgt dabei zweckmäßig mit Hilfe der Energieversorgungseinheiten 23 und 24, da die Führmagnete normalerweise keine Wicklungen von Lineargeneratoren aufweisen. Anders als bei der Magnetanordnung 10 sind bei der Magnetanordnung 10a nur drei Magnetpole 32 vorhanden, die durch zwei Reihen von je drei Wicklungen gebildet werden.

Die für die Funktion "Tragen" bestimmte Magnetanordnung 10 besitzt zwölf Magnetpole 11, die in zwei Gruppen von je sechs unmittelbar nebeneinander liegenden Magnetpolen eingeteilt sind. Dabei wird jede dieser Gruppen durch je einen Regelkreis 18 geregelt und zweckmäßig auch durch je eine der Gruppe einzeln zugeordnete Energieversorgungseinheit 23, 24 mit Strom versorgt. Dadurch wird einerseits der Vorteil erzielt, daß beim Ausfall einer Gruppe die jeweils andere Gruppe weiter arbeitet. Andererseits wird der zugehörige Schweberahmen 16 mit seinen biegesteifen Längs- und Querverbindern beim Ausfall einer Gruppe durch eine zugeordnete Gruppe einer benachbarten Magnetanordnung, die dann vorzugsweise mit einem entsprechend höheren Strom beaufschlagt wird, in seiner Lage gehalten, ohne daß das Magnetschwebefahrzeug 1 auf eine Gleitschiene abgesetzt wird oder die Magnetanordnung 10 an den Langstator anschlägt. Allerdings ergeben sich dadurch die beiden folgenden Nachteile.

Ein erster Nachteil der gruppenweisen Zusammenfassung von je sechs Magnetpolen 11 besteht darin, daß in ihren Wicklungen 12 vergleichsweise hohe Spannungen auftreten können. Diese werden vor allem durch kapazitive Spannungsüberhöhungen verursacht, die sich aufgrund der Herstellung der Wicklungen der Magnetpole 11 aus Leitungsbändern und die dadurch erzeugten, parasitären Kapazitäten ergeben. Die aus den Induktivitäten der Wicklungen und den parasitären Kapazitäten gebildeten elektrischen Schwingkreise führen bei der Anregung der Magnetanordnung 10 zu Resonanzschwingungen, die so hohe Spannungen und Ströme zur Folge haben können, daß Isolationsschäden auftreten. Ein weiterer Nachteil ist, daß die Regelkreise 18 mit besonderen Sicherheitseinrichtungen versehen werden müssen, die beim fehlerhaften Arbeiten eines Stellgliedes 22 (Fig. 4) verhindern, daß die zugeordnete Gruppe von Magnetpolen 11 an den Langstator anschlägt.

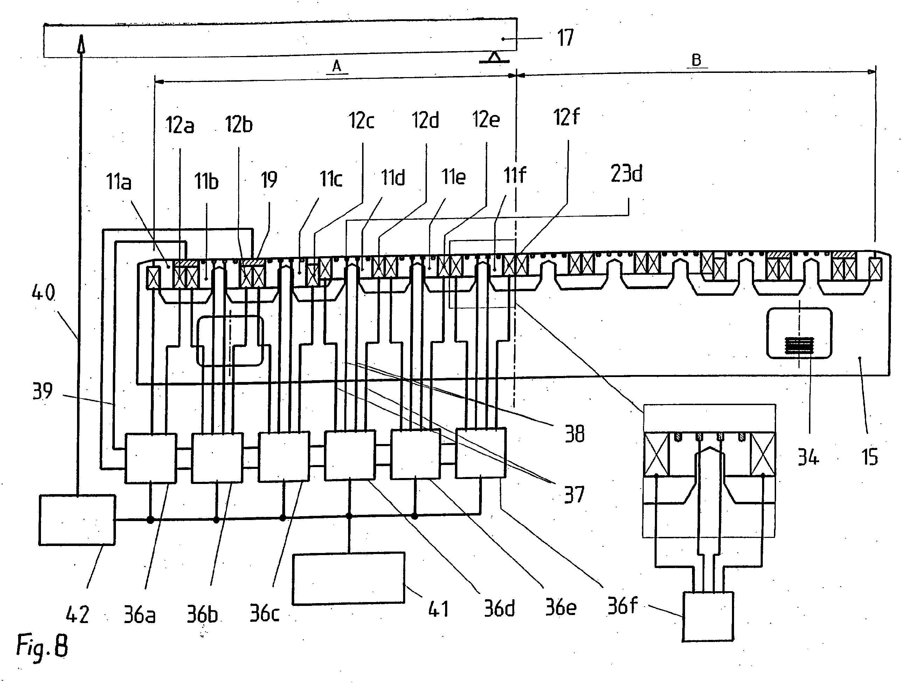

Erfindungsgemäß wird zur Vermeidung dieser Nachteile vorgeschlagen, daß jede Gruppe nur einen Magnetpol 11 oder höchstens zwei Magnetpole 11 enthält. Eine derartige Aufteilung der Magnetpole 11 ist in Fig. 6 bis 8 dargestellt. Die Magnetanordnung 10 enthält hier zwölf Magnetpole 11a bis 111 mit Wicklungen 12a usw., nur teilweise dargestellten Spaltsensoren 19 sowie den Wicklungen 23 des Lineargenerators. Außerdem sind wie in Fig. 2 der Magnetrücken 15 und die Einschübe 30 angedeutet, die die Regelkreise 18 und Energieversorgungseinheiten enthalten, wobei allerdings die in den Einschüben 30 enthaltenen Komponenten zum besseren Verständnis in Fig. 8 unterhalb des Magnetrückens 15 dargestellt sind. Mit dem Bezugszeichen 34 sind Ausnehmungen angedeutet, in die die Enden der Gestellbügel 6 nach Fig. 1 und 2 eintreten. Weiter zeigt Fig. 6 die in Fig. 2 nicht sichtbaren Polrücken 35, die die Kerne 14 der Magnetpole 11 miteinander verbinden. Schließlich zeigen Fig. 6 und 8, daß je sechs Magnetpole 11a bis 11f bzw. 11g bis 111 je einen Halbmagneten A bzw. B bilden, die in bekannter Weise mechanisch mit dem Schweberahmen 16 für den Wagenkasten 17 (Fig. 1) des Magnetschwebefahrzeugs 1 gekoppelt sind.

Elektrisch werden die Magnetpole 11, wie Fig. 8 zeigt, jeweils einzeln und unabhängig voneinander gesteuert. Dazu ist im Halbmagneten A jedem Magnetpol 11a bis 11f je eine Magnetpoleinheit 36a bis 36f zugeordnet, die je einen zugehörigen Regelkreis 18 und einen zugehörigen, mit einem Hochsetzsteller od. dgl. versehenen Spannungswandler 24 gemäß der obigen Beschreibung enthält. Ferner ist jede Magnetpol-Wicklung 12 (z. B. speziell eine Wicklung 12d des Magnetpols 11d) über Leitungen 37 mit einer zugehörigen Magneteinheit (z. B. speziell der Magnetpoleinheit 36d) und dem in ihr enthaltenen Regelkreis 18 und jede Lineargenerator-Wicklung 23 (z. B. speziell eine Wicklung 23d des Magnetpols 11d) über Leitungen 38 mit der zugehörigen Magnetpoleinheit 36d und dem in ihr enthaltenen Spannungwandler 24 gemäß Fig. 4 verbunden. Für alle anderen Magnetpole 11 gilt sinngemäß dasselbe, wie insbesondere die in Fig. 8 vergrößerte Darstellung des Magnetpols 11f zeigt. Außerdem sind die vorhandenen Spaltsensoren 19 über Leitungen 39 mit allen Magnetpoleinheiten 36 verbunden, um deren Regelkreisen 18 die jeweiligen Istwerte des Spalts 7 zu übermitteln. Der andere Halbmagnet B ist entsprechend ausgebildet.

Aufgrund der beschriebenen Anordnung enthält jeder Halbmagnet A, B je sechs Magnetpole 11 mit je einer zugeordneten Magnetpoleinheit 36. Wird daher ein Magnetpol 11 oder die zugehörige Magnetpoleinheit 36 defekt, besteht keine Gefahr, daß die Magnetpolanordnung 10 oder ein Halbmagnet A, B insgesamt ausfällt, da die Nachbar-Magnetpole der defekten Einheit ohne weiteres deren Funktion mit übernehmen können. Daher ist es weder erforderlich, die Regelkreise 18 mit besonderen Sicherungseinrichtungen gegen Fehlsteuerungen der Stellglieder 22 zu versehen, noch treten die schädlichen, kapazitiven Spannungsüberhöhungen auf. Entsprechende Vorteile ergeben sich, wenn die Magnetpole 11 nicht einzeln, sondern paarweise angesteuert werden. Besonders vorteilhaft ist es, daß beim Ausfall irgendeiner Komponente immer nur einer oder höchstens zwei Magnetpole 11, aber nicht sechs oder zwölf Magnetpole 11 eines Halbmagneten oder der ganzen Magnetanordnung 10 ausfallen. Außerdem wird das Spannungsniveau erniedrigt, wodurch die für das Bordnetz vorgesehene Spannung reduziert werden kann.

Im übrigen zeigt Fig. 8 noch eine Besonderheit im Hinblick auf die Magnetpole 11a und 111, die den Anfang bzw. das Ende der Magnetanordnung 10 bilden. Da diese Magnetpole 11a, 111 als halbe Pole ausgebildet sind, so daß kein Platz für die Anbringung einer Lineargenerator-Wicklung 23 vorhanden ist, wird die zugehörige Magnetpoleinheit 36a bzw. 361 zweckmäßig vom Bordnetz aus mit Strom versorgt, wie in Fig. 8 durch eine Leitung 40 angedeutet ist.

Entsprechend kann im Hinblick auf die Steuerung der Magnetpole 32 des Führmagneten vorgegangen werden.

Die Erzeugung der Bordenergie mit Hilfe von Lineargeneratoren funktioniert nur in Fahrwegabschnitten, in denen die Geschwindigkeit des Magnetschwebefahrzeugs 1 eine bestimmte Mindestgröße erreicht. In anderen Fahrwegabschnitten erfolgt die Energieerzeugung daher mit Hilfe von am Fahrweg verlegten Stromschienen, denen mechanische oder mechanisch-pneumatische Stromabnehmer 41 (Fig. 8) zugeordnet sind. Die Stromabnehmer 41 sind zusätzlich zu den Wicklungen 23 vorhandene Bestandteile der Energieversorgungseinheit insgesamt und werden entsprechend Fig. 8 bei Einzelpolansteuerung mit jeder einzelnen Magnetpoleinheit 36 verbunden. Außerdem führt der Ausgang des Stromabnehmers 41 über einen geeigneten, z. B. einen Hochsetzsteller enthaltenden Spannungswandler 42 zur Leitung 40. Wie Fig. 2 und 5 zeigen, ist der Stromabnehmer 41 z. B. in dem mit der Verkleidung 28 aerodynamisch abgedeckten Magnetrücken 15 und damit wie die Wicklungen 23 des Lineargenerators in die autonome Baueinheit der Magnetpolanordnung 10 integriert.

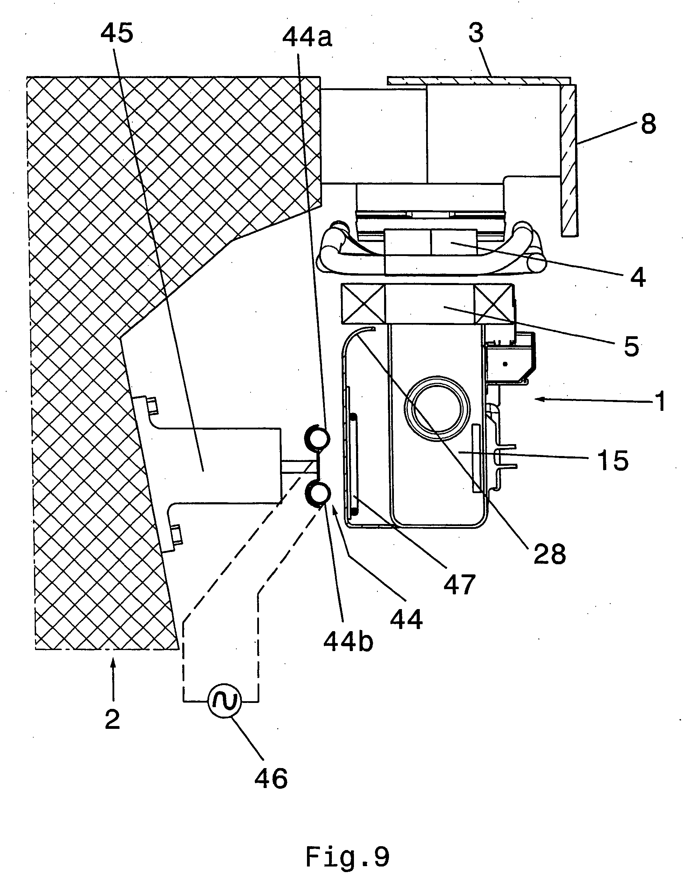

Da Stromschienen und mechanische Stromabnehmer 41 wegen der Verschleißneigung insbesondere bei hohen Geschwindigkeiten nicht immer erwünscht sind, ist nach einem weiteren wesentlichen Merkmal der Erfindung vorgesehen, die Energieübertragung vom Fahrweg 3 auf das Magnetschwebefahrzeug 1 auf eine andere Weise berührungslos und vorzugsweise induktiv zu bewirken. Dies ist insbesondere in Fig. 9 gezeigt, die einen im wesentlichen der Fig. 1 entsprechenden, jedoch vergrößerten schematischen Schnitt zeigt.

Nach Fig. 9 ist an einer Stelle des Fahrwegs, an der bisher die Stromschiene für den Stromabnehmer 41 (Fig. 8) angeordnet ist, ein als Sendespule ausgebildeter Primärleiter 44 vorgesehen, der vorzugsweise je einen hin- und herlaufenden Leitungsabschnitt 44a, 44b enthält und sich zweckmäßig über die gesamte Länge des Fahrwegs 2, 3 erstreckt. Die beiden Leitungsabschnitte 44a, 44b sind z. B. mittels einer aus einem Isolator bestehenden Halterung 45 am Träger 2 befestigt. Der Primärleiter 44 liegt außerdem an einer nur schematisch dargestellten, vorzugsweise hochfrequenten Spannungsquelle 46 von z. B. 300 V.

Am Magnetschwebefahrzeug 1 ist anstelle des Stromabnehmers 41 eine Empfängerspule 47 montiert. Diese ist vorzugsweise so ausgebildet, daß sie den Primärleiter 44 nicht umgreift, sondern diesem mit einem geringen Abstand gegenübersteht. Dadurch ist es möglich, die Empfängerspule 47 wie die übrigen beschriebenen Komponenten der Regelkreise 18 und der Energieversorgungseinheiten erfindungsgemäß im Magnetrücken 15 unterzubringen und mit der aus einem elektrisch isolierenden Material bestehenden Verkleidung 28 abzudecken.

Nach einem besonders bevorzugten Ausführungsbeispiel ist die Halterung 45 in der Weise klappbar ausgebildet, daß der Primärleiter 44 nach oben oder unten schwenkbar am Träger 2 montiert ist und abschnittsweise weggeschwenkt werden kann. Es kann dann vermieden werden, daß der Primärleiter 44 bei Arbeiten, bei denen er im Weg ist, völlig demontiert werden muß.

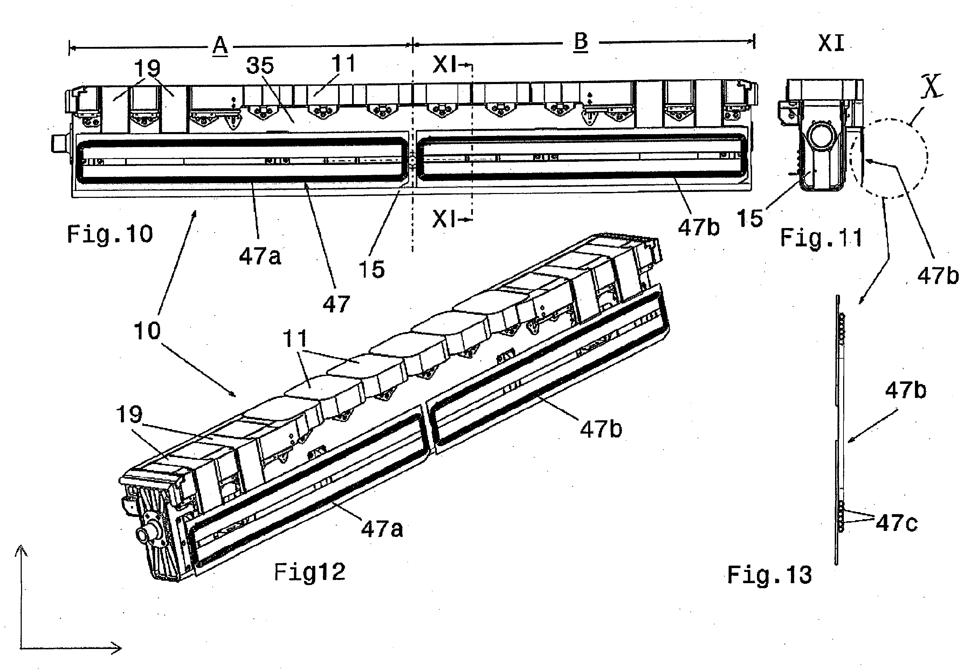

Fig. 10 bis 13 zeigen in einer der Fig. 5 ähnlichen Darstellung die Ausbildung der Empfängerspule 47, die aus Gründen der Redundanz zweckmäßig zwei Hälften 47a und 47b aufweist, die je einem der oben beschriebenen Halbmagneten A, B zugeordnet sind und daher im Ausführungsbeispiel eine Länge von je ca. 1500 mm aufweisen. Dabei besteht jede in Fig. 10 und 12 mit einer dicken Linie dargestellte Hälfte 47a, 47b vorzugsweise aus einer Mehrzahl von parallelen Leitern 47c (Fig. 13), die so relativ zum Primärleiter 44 angeordnet sind, daß sie von den von diesem bzw. den Leitungsabschnitten 44a, 44b erzeugten, konzentrischen magnetischen Feldlinien durchdrungen werden und an ihren nicht dargestellten Anschlußenden die vom Primärleiter 44 gelieferte Spannung von ca. 300 V ausgekoppelt werden kann. Die beiden Anschlußenden können daher analog zu Fig. 8 mit den Magnetpoleinheiten 36 bzw. dem Spannungswandler 42 verbunden werden. Dabei ist klar, daß zweckmäßig an beiden Seiten des Trägers 2 entsprechende Primärleiter 44 verlegt werden, wenn die Magnetschwebefahrzeuge 1 an beiden Längsseiten mit Magnetanordnungen 10, 10a versehen sind.

Die Empfängerspule 47 wird vorzugsweise als vorgefertigte Baugruppe gemeinsam mit den notwendigen Kontaktierungselementen, z. B. Steckverbindern, hergestellt und am Magnetrücken 15 oder der Verkleidung 28 so montiert bzw. in diese integriert, daß sie ein Teil der von der Magnetanordnung 10 gebildeten autonomen Baueinheit bildet. Ein wesentlicher Vorteil der berührungslosen Energieübertragung besteht darin, daß sie mechanisch verschleißarm arbeitet und die ausgekoppelte Energie wie bei Anwendung einer Stromschiene von der Fahrtgeschwindigkeit unabhängig ist. Außerdem ergibt sich vielfache Redundanz, da pro Magnetanordnung 10 je zwei Spulenhälften 47a, 47b vorhanden sind. Weiter können die Wicklungen 23 des Lineargenerators und bei entsprechender Auslegung sogar die Hochsetzsteller und Bordbatterien entfallen. Eine etwaige Notstromversorgung könnte dann mit einfachen, auf der Fahrwegseite angeordneten Bleibatterien sichergestellt werden.

Die Erfindung ist nicht auf die beschriebenen Ausführungsbeispiele beschränkt, die auf vielfache Weise abgewandelt werden können. Dies gilt insbesondere für die Zahl der pro Magnetschwebefahrzeug insgesamt vorhandenen Magnetanordnungen 10, 10a und den Aufbau von Modulen aus den Magnetanordnungen 10, 10a zu Tragmagneten, Führmagneten oder Kombinationen von Trag- und Führmagneten. Weiter kann die Zahl der Magnetpole 11, 32 pro Trag- oder Führmagnet anders als beschrieben gewählt werden. Schließlich versteht sich, daß die verschiedenen Merkmale auch in anderen als den dargestellten und beschriebenen Kombinationen angewendet werden können.

## Patentansprüche

1. Magnetanordnung für ein Magnetschwebefahrzeug mit einer Mehrzahl von durch je einen Kern (14) und eine Wicklung (12) gebildeten Magnetpolen (11), die zu Gruppen von Magnetpolen (11) zusammengefaßt sind, mit einer der Zahl der Gruppen entsprechenden Anzahl von Regelkreisen (18) zur Regelung eines die Wicklungen (12) einer zugeordneten Gruppe von Magnetpolen (11) durchfließenden Stroms und mit einer Energieversorgungseinheit für die Regelkreise (18), **dadurch gekennzeichnet, daß** jede Gruppe einen Magnetpol (11) oder zwei Magnetpole (11) enthält, daß die Energieversorgungseinheit in den Magnetpolen (11) ausgebildete Wicklungen (23) eines Lineargenerators enthält und jedem Regelkreis (18) eine separate Energieversorgungseinheit zugeordnet ist, die diejenigen Lineargenerator-Wicklungen (23) enthält, die in den Magnetpolen (11) der dem Regelkreis (18) zugeordneten Gruppe vorhanden sind und daß die Energieversorgungseinheit für jede Gruppe der Magnetpole (11) wenigstens je einen separaten, mit den zugehörigen Lineargenerator-Wicklungen (23) verbundenen Spannungswandler (24) aufweist.

2. Magnetanordnung nach Anspruch 1, **dadurch gekennzeichnet, daß** die Regelkreise (18) und Energieversorgungseinheiten (23, 24) in einem Magnetrücken (15) der Magnetanordnung (10) untergebracht sind.

## Claims

1. A magnet arrangement for a magnetic levitation vehicle with a plurality of magnetic poles (11) each formed from a core (14) and a winding (12), the magnetic poles being combined to form groups of magnetic poles (11), with a number of control circuits (18) corresponding to the number of groups for controlling a current flowing through the windings (12) of an associated group of magnetic poles (11) and with an energy supply unit for the control circuits (18), **characterised in that** each group includes one magnetic pole (11) or two magnetic poles (11), that the energy supply unit contains windings (23) of a linear generator, which are formed in the magnetic poles (11) and each control circuit (18) has a separate energy supply unit associated with it, which contains those linear generator windings (23), which are present in the magnetic poles (11) of the group associated with the control circuit (18) and **in that** the energy supply unit for each group of magnetic poles (11) comprises at least one separate voltage transformer (24) connected to the associated linear generator windings (23).

2. The magnet arrangement according to claim 1, **characterised in that** the control circuits (18) and energy supply units (23, 24) are housed in a magnetic spine (15) of the magnet arrangement (10).

## Revendications

1. Système magnétique pour un véhicule à sustentation magnétique avec une pluralité de pôles magnétiques (11) formés respectivement par un noyau (14) et un enroulement (12), lesquels sont réunis en groupes de pôles magnétiques (11), avec un nombre de circuits de régulation (18) correspondant au nombre de groupes pour la régulation d'un courant s'écoulant à travers les enroulements (12) d'un groupe associé de pôles magnétiques (11) et avec une unité d'alimentation en énergie pour les circuits de régulation (18), **caractérisé en ce que** chaque groupe contient un pôle magnétique (11) ou deux pôles magnétiques (11), que l'unité d'alimentation en énergie contient des enroulements (23) d'un générateur linéaire formés dans les pôles magnétiques (11) et qu'à chaque circuit de régulation (18), une unité d'alimentation en énergie séparée est associée, laquelle contient ceux des enroulements de générateur linéaire (23) qui sont présents dans les pôles magnétiques (11) du groupe associé au circuit de régulation (18) et que l'unité d'alimentation en énergie présente, pour chaque groupe des pôles magnétiques (11), au moins respectivement un convertisseur de tension (24) séparé relié aux enroulement de générateur linéaire (23) associés.

2. Système magnétique selon la revendication 1, **caractérisé en ce que** les circuits de régulation (18) et les unités d'alimentation en énergie (23, 24) sont hébergés dans un dos magnétique (15) du système magnétique (10).
